Europäisches Patentamt

European Patent Office

Office européen des brevets

(19)

(11) Publication number: **0 234 063 B1**

(12) ## EUROPEAN PATENT SPECIFICATION

(45) Date of publication of patent specification: **10.04.91**    (51) Int. Cl.⁵: **C08L 71/12**, C08L 77/00, C08L 51/00

(21) Application number: **86202389.2**

(22) Date of filing: **30.12.86**

(54) **Polymer mixture which comprises a polyamide, a polyphenylene ether and an agent to improve the impact resistance.**

(30) Priority: **27.01.86 NL 8600166**

(43) Date of publication of application:
**02.09.87 Bulletin 87/36**

(45) Publication of the grant of the patent:
**10.04.91 Bulletin 91/15**

(84) Designated Contracting States:
**DE FR GB IT NL**

(56) References cited:
**EP-A- 0 024 120        EP-A- 0 046 040**
**EP-A- 0 054 900        EP-A- 0 147 874**
**EP-A- 0 164 767        WO-A-85/05372**
**WO-A-87/03892**

(73) Proprietor: **GENERAL ELECTRIC COMPANY**
**1 River Road**
**Schenectady New York 12305(US)**

(72) Inventor: **van der Meer, Roelof**
**General Electric Plastics B.V. P.O. Box 117**
**NL-4600 AB Bergen op Zoom(NL)**
Inventor: **Lohmeijer, Johannes Hubertus Gabriel Marie**
**General Electric Plastics B.V. P.O. Box 117**
**NL-4600 AB Bergen op Zoom(NL)**
Inventor: **Heuschen, Jean Marie Hubert**
**General Electric Plastics B.V. P.O. Box 117**
**NL-4600 AB Bergen op Zoom(NL)**

(74) Representative: **Schüler, Horst, Dr. et al**
**Kaiserstrasse 69**
**W-6000 Frankfurt/Main 1(DE)**

EP 0 234 063 B1

## Description

The invention relates to a polymer mixture which comprises a polyamide, a polyphenylene ether, an agent to improve the compatibility of the polyamide and the polyphenylene ether and a core-shell polymer having a rubber-like core and one or more shells as an agent to improve the impact resistance wherein the mixture comprises one or more of the following agents A-F to improve the compatibility:

A) liquid diene polymers or epoxy compounds or compounds having in their molecular structure a double or triple carbon-to-carbon bond and a carboxylic acid, acid anhydride, ester, acid amide, imido, carboxylic acid ester, amino or hydroxyl group, in a quantity of from 0.01 to 30 parts by weight per 100 parts by weight of polyamide plus polyphenylene ether,

B) a silane compound having in its molecular structure both (a) at least one silicon atom which is bonded to a carbon atom via an oxygen bridge and (b) at least an ethylenic carbon-to-carbon double bond or a carbon-to-carbon triple bond and/or comprises a functional group selected from an amine group and a mercapto group, in which the functional group is not bonded directly to the silicon atom, in a quantity of from 0.05 to 4 parts by weight per 100 parts by weight of polyamide plus polyphenylene ether,

C) a functionalized polyphenylene ether consisting of the reaction product of (a) a polyphenylene ether and (b) a compound of the general formula (i)-Z-(ii), in which (i) is at least a group of the formula [X-C(0)-}with X = F, Cl, Br, I, OH, -OR, or -O-C(O)-R with R = H, alkyl or aryl, in which (ii) is at least a carboxylic acid, acid anhydride, acid amide, imido, carboxylic acid ester, amino or hydroxyl group, and in which the groups (i) and (ii) are bonded together covalently via a bridge Z, Z being a bivalent hydrocarbon radical,

D) an oxidized polyolefin wax, in a quantity of from 0.01 to 10 parts by weight per 100 parts by weight of polyamide plus polyphenylene ether,

E) a copolymer having units of a vinylaromatic compound and of an alpha-beta unsaturated dicarboxylic acid or dicarboxylic acid anhydride or a copolymer with units of a vinylaromatic compound and of an imide compound of an alpha-beta unsaturated dicarboxylic acid, in a quantity of from 0.5 to 100 parts by weight per 100 parts by weight of polyamide plus polyphenylene ether,

F) the reaction product of a) a 1,2-substituted olefinic compound with carboxyl group or acid anhydride group, b) a polyphenylene ether and c) a radical initiator, in a quantity of from 0.5 to 150 parts by weight per 100 parts by weight of polyamide plus polyphenylene ether.

Post-published EP 87900556 = wo 87/3893 discloses compositions describing a polyphenylene ether, a polyamide and a core / shell polymer having a rubber core and a shell that may comprise a small amount of acrylonitrile and/or methyl methacrylate.

Polymer mixtures which comprise a polyamide, a polyphenylene ether, an agent to improve the compatibility of the polyamide and the polyphenylene ether and optionally an agent to improve the impact resistance are known from EP-A 0024120; EP-A 0046040 and EP-A 0147874.

It is stated in EP-A 0024120 that it is desirable to incorporate in the polymer mixtures rubberlike polymers having a high molecular weight to improve the impact resistance. By way of example are mentioned inter alia ethylene-propylene, ethylene-propylene-diene copolymers and partially hydrogenated styrene/butadiene block copolymers. There are no examples in which these rubber-like polymers are used. According to EP-A 0024120, a liquid diene compound or an epoxy compound or a compound having a double or triple carbon to carbon bond in the molecular structure and a carboxylic acid, acid anhydride, acid amide, imido, carboxylic acid ester, amino or hydroxyl group is used as an agent to improve the compatibility - in the meaning as will be defined hereinafter.

According to EP-A 0046040 the polymer mixtures described therein may comprise an agent improving the impact resistance. In the specification are mentioned by way of example a) graft polymers obtained by graft polymerization of a monomer which comprises as the main constituent a vinylaromatic compound on a rubber-like polymer and b) thermoplastic elastomers. One graft polymer which is mentioned by name is high-impact polystyrene. As thermoplastic elastomers are mentioned inter alia hydrogenated and non-hydrogenated styrenebutadiene block copolymers and styrene-ethylenepropylene polymers. It is stated that the graft polymer or the thermoplastic elastomer can be used individually or in combination. High-impact polystyrene having a high polybutadiene content and combinations of high-impact polystyrene and a hydrogenated styrene-butadiene block copolymer are used in the examples. One of these agents, notably the hydrogenated styrene-butadiene block copolymer, is generally considered as an agent which is particularly suitable to improve the impact strength of polyphenylene ether or of mixtures of polyphenylene ethers and high-impact polystyrene. The polymer mixtures according to EP-A 0046040 comprise a copolymer with units of a vinylaromatic compound and an alpha-beta dicarboxylic acid anhydride or an imide of an alpha-beta unsaturated dicarboxylic acid as an agent to improve the compatibility.

2

The polymer mixtures according to EP-A 0147874 may comprise one or more agents to Improve the impact resistance: mentioned by name as such are high-impact polystyrene, polybutadiene, ethylene-propylene-diene rubbers and hydrogenated or non-hydrogenated thermoplastic rubbers. This Patent Application does not give any examples in which agents improving the impact resistance are used. According to this Application, a copolymer with 50-90 mol % units of a vinylaromatic compound and with 41-50 mol % units of an unsaturated dicarboxylic acid or a derivative thereof is used as an agent to improve the compatibility.

The invention is based on the use of a special agent to improve the impact resistance. By using such a special agent a polymer mixture with a good balance of properties is obtained, in particular with respect to the impact resistance.

The polymer mixtures according to the invention comprises as an agent to improve the impact resistance, a core-shell polymer having a rubber-like core and one or more shells, characterized in that the outermost shell comprises one or more functional groups selected from carboxylic acid groups, acid anhydride groups, acid amide groups, imido groups, amino groups, or hydroxyl groups and possesses a styrene content of 90.4 % by weight or higher.

In the polymer mixtures according to the invention the agent to improve the impact resistance may consist of a mixture of agents to improve the impact resistance.

The polymer mixture according to the invention comprises the said constituents preferably in the following quantities, the percentages being calculated by weight with respect to the sum of the quantities by weight of polyamide(s), plus polyphenylene ether(s), plus impact resistance improving agent(s): 5-94% of polyamide(s), 94-5% of polyphenylene ethers; 1-50% of agen(t) to improve the impact resistance.

The polymer mixtures according to the invention comprise one or more agents to improve the compatibility of the polyamide and the polyphenylene ether. These are to be understood to be agents which facilitate the mixing in the melt of two non-miscible polymers and also improve the bonding between the phases in such systems (see Chapter I of "Polymer-Polymer Miscibility", Academic Press, 1979). In practice this means that said agents suppress the tendency to phase agglomeration and delamination of two-phase polymer mixtures.

The agents for improving the compatibility mentioned sub C) and F) can replace the polyphenylene ether in the polymer mixtures according to the invention entirely or partly.

Upon preparing the polymer mixtures according to the invention it has been found that the way of preparing and notably the sequence in which the various constituents are mixed together often is of great importance to obtain optimum properties. The correct sequence depends on the specifically used constituents.

It is generally preferred to use a method in which the polyphenylene ether is mixed first with the agent to improve the compatibility before the polyphenylene ether is mixed with the remaining constituents. However, this does not hold in all cases.

Mixing the individual constituents is preferably carried out by mixing in the melt, for example, in an extruder.

The polymer mixtures according to the invention comprise at least one or more compounds selected from each of the groups of compounds mentioned hereinafter:
- polyphenylene ether
- polyamide
- agent to improve the compatibility
- agent to improve the impact resistance

Polyphenylene ethers

Polyphenylene ethers are compounds which are known per se . For this purpose reference may be made to the US-A-3,306,874; 3,306,875; 3,257,357 and 3,257,358. Polyphenylene ethers are usually prepared by an oxidative coupling reaction -in the presence of a copper amine complex - of one or more two-fold or three-fold substituted phenols; homopolymers and copolymers, respectively, being obtained. Copper amine complexes derived from primary, secondary and/or tertiary amines may be used. Examples of suitable polyphenylene ethers are:
poly(2,3-dimethyl-6-ethylphenylene-I,4-ether)
poly(2,3,6-trimethylphenylene-I,4-ether)
poly [2-(4'-methylphenyl)phenylene-I,4-ether]
poly(2-bromo-6-phenylphenylene-I,4-ether)

poly(2-methyl-6-phenylphenylene-l,4-ether)
poly(2-phenylphenylene-l,4-ether)
poly(2-chlorophenylene-l,4-ether)
poly(2-methylphenylene-l,4-ether)
poly(2-chloro-6-ethylphenylene-l,4-ether)
poly(2-chloro-6-bromophenylene-l,4-ether)
poly(2,6-di-n-propylphenylene-l,4-ether)
poly(2-methyl-6-isopropylphenylene-l,4-ether)
poly(2-chloro-6-methylphenylene-l,4-ether)
poly(2-methyl-6-ethylphenylene-l,4-ether)
poly(2,6-dibromophenylene-l,4-ether)
poly(2,6-dichlorophenylene-l,4-ether)
poly(2,6-diethylphenylene-l,4-ether)
poly(2,6-dimethylphenylene-l,4-ether)

Copolymers, for example, copolymers derived from two or more phenols as used in the preparation of the above-mentioned homopolymers are also suitable. Furthermore suitable are graft copolymers and block copolymers of vinylaromatic compounds, for example, polystyrene, and of polyphenylene ether as described hereinbefore.

When an agent to improve the compatibility as indicated hereinbefore sub C) or F) is used, the polyphenylene ether may be replaced entirely or partly by said agent.

Polyamides

Polyamides are used in the polymer mixtures according to the invention. In the method according to the invention polyamides are used as the constituent B. All thermoplastic polyamides known per se may be used in the polymer mixtures according to the invention. Suitable polyamides are, for example, polyamide-4; polyamide-6; polyamide-4,6; polyamide-6,6; polyamide-3,4; polyamide-l2; polyamide-ll; polyamide-6,l0; polyamides prepared from terephthalic acid and 4,4'-diaminocyclohexyl methane, polyamides prepared from azelaic acid, adipic acid and 2,2-bis-(p-aminocyclohexyl)propane, polyamides prepared from adipic acid and metaxylylene diamine, polyamides from terephthalic acid and trimethyl hexamethylene diamine. Particularly useful are the so called amorphous polyamides, which are well known in the art.

Agent to improve the compatibility .

The polymer mixtures according to the invention must comprise one or more constituents to improve the compatibility. The use of an agent to improve the compatibility in polymer mixtures which comprise a polyphenylene ether and a polyamide is known per se in itself. The polymer mixtures according to the invention comprise one or more of the above-mentioned agents to improve the compatibility.

The agents mentioned above sub (A) to improve the compatibility are known from EP-A-0 024 l20. All the agents mentioned therein are suitable for the polymer mixtures according to the invention. Notably, maleic anhydride, maleic acid, fumaric acid, maleimides, maleic acid amides and further reaction products of the compounds just mentioned with a (di)amine, are particularly suitable, as well as all the compounds mentioned in EP-A-0 024 l20 on page 6, line l to page l2, line 27.

The agents mentioned above sub (B) to improve the compatibility are disclosed in EP-A-0l82l63. The silane derivatives mentioned therein have at least one silicon atom which is bonded to a carbon atom via an oxygen bridge. For that purpose, at least an alkoxy group or an acetoxy group will usually be present in the silane. Moreover, silicon atoms which are bonded together via an oxygen bridge, i.e. siloxane groups, may be present in the silane derivative. In addition, the silane derivatives must have at least one of the following characteristic features, namely the presence in the molecule of one or more carbon-to-carbon double bonds or triple bonds, an amino group and/or a mercapto group. The carbon-to-carbon double or triple bond may be coupled directly to the silicon atom. The mercapto group or the amino group may not be coupled directly to a silicon atom. Examples of suitable silane derivatives are: gamma aminopropyl triethoxy silane; vinyl-tris-(2-methoxy-ethoxy)silane: 5-(bicycloheptenyl)triethoxy silane and gamma mercaptopropyl trimethoxy silane.

The agents mentioned above sub C) for improving the compatibility are disclosed in WO 86/02086. The compounds mentioned therein can be obtained by reacting a polyphenylene ether with, for example,

4

EP 0 234 063 B1

chloroethyanoyl succinic anhydride; trimellitic anhydride acid chloride; chloroformyl succinic anhydride; l-acetoxyacetyl-3,4-dibenzoic acid anhydride, the acid chloride of terephthalic acid. The compounds formed can be purified by precipitation in methanol or acetone. These agents may be used in combination with primary or secondary amines, for example, butyl amine, dibutyl amine, n.octadecyl amine.

The use of the compound mentioned above sub (D) to improve the compatibility is described in EP-A-0164767 Said compounds may optionally be used in combination with an organic phosphite. Oxidized polyolefin waxes are compounds known per se . For this purpose reference may be made, for example, to DE-A 20 35 706; DE-A 30 47 9l5 and DE-A 22 0l 862. These types of wax are usually prepared by oxidation in air or in suspension of a polyolefin wax.

The compounds mentioned above sub (E) are disclosed in EP-A 0 046 040 and EP-A 0 l47 874. Examples of these compounds are styrene-maleic anhydride copolymers, styrene-maleic anhydride-methacrylate terpolymers, styrene-maleic anhydride-acrylate terpolymers, and the rubber-modified variants of these compounds.

The compounds mentioned above sub (F) and their mode of preparation are disclosed in JP-A-59/059,724; 59/086,653 and 59/066,452. They relate to the reaction product of a) a l,2-substituted olefinic compound with carboxyl group or acid anhydride group (for example, maleic anhydride) b) a polyphenylene ether and c) a radical initiator (for example, benzoyl peroxide).

Agent to improve the impact strength

The polymer mixture according to the invention comprises a core-shell polymer according to claim 1 to improve the impact resistance.

The Core-shell polymers have a rubber-like core and one or more shells (core-shell polymer), the outermost shell of which comprises one or more functional groups selected from carboxylic acid groups, acid anhydride groups, acid amide groups, imido groups, amino groups or hydroxyl groups and possesses a styrene content of 90.4 % by weight or higher. Such core-shell polymers are described, for example, in US-A-3,668,274; 4,034,0l3; 4,474,927. This type of core-shell polymers is generally prepared by incorporating in the (outermost) shell - by a polymerisation reaction - a monomer which comprises a double or triple unsaturated bond and one or more of the above-mentioned functional groups. Examples of these core-shell polymers are polymers having a core of poly n-butylacrylate rubber and a shell of styrene copolymer or styrene-acrylonitrile terpolymer with at least 0.1% by weight of maleic anhydride.

Of course it is possible to use a combination of one or more of the above-mentioned agents to improve the impact strength.

The polymer mixtures according to the invention comprise the indicated constituents preferably in the following quantities, the said percentages being calculated by weight with respect to the sum of the quantities by weight of polyamide(s), polyphenylene ether(s) and impact-resistance-improving agent(s): 5-94% of polyamide(s); 94-5% of polyphenylene ether(s); l-50% of agent(s) to improve the impact strength.

In addition to the above-mentioned constituents, the polymer mixtures according to the invention may comprise one or more of the following constituents: styrene homo- or copolymers, high-impact polystyrene, dyes, pigments, fillers, reinforcing fillers such as glass fibres, stabilizers and flame retarding agents. As stabilizers may be used the agents known generally for polyamides and/or polyphenylene ethers.

The polymer mixtures according to the invention may be prepared in various manners: by mixing solutions or slurries of the constituents, followed by evaporating or also by melt extrusion. Melt extrusion is generally preferred. In melt extrusion, the individual constituents are introduced, for example, into an extruder. In the extruder the constituents are heated, usually to a temperature above the melting temperature of the constituent(s) having the highest or one of the highest melting-point(s), for example, the polyphenylene ether, and intimately mixed. The extruder then produces the so-called extrudate, usually in the form of a strand, which is chopped up. The resulting pieces of the polymer mixtures according to the invention may further be processed according to techniques known per se for injection moulding of thermoplastic synthetic resins.

In preparing the polymer mixtures according to the invention in an extruder it has been found that the sequence in which the various constituents are mixed can be of importance. For example, polymer mixtures having better properties are often obtained when the polyphenylene ether or a part of the quantity of polyphenylene ether to be used is pre-mixed in an extruder in a separate step with the agent to improve the compatibility. The resulting pre-extrudate is then mixed with the remaining constituents in an extruder.

It is also possible first to prepare a pre-mixture of the polyamide or a part of the quantity of polyamide to be used and the agent to improve the impact resistance. The resulting pre-mixture is then mixed with the

5

remaining constituents.

In some cases, polymer mixtures having better properties were obtained when first the polyamide or a part of the quantity of polyamide to be used, is mixed in the melt with the agent to improve the impact resistance; the polyphenylene ether or a part of the quantity of polyphenylene ether to be used is then mixed with the agent to improve the compatibility in the melt, after which the two resulting pre-mixtures and the constituents possibly not yet incorporated in the pre-mixtures are mixed in the melt.

The invention also relates to products obtained from the polymer mixtures according to the invention.

The invention will now be described with reference to the ensuing specific examples.

Examples I to IV and A.

Various core-shell polymers were prepared by polymerization of butylacrylate for the core and of methyl methacrylate or methyl methacrylate/styrene mixtures, with in most cases maleic anhydride for the shell. These core-shell polymers (Nos 1-4) were prepared as follows:

The preparation of PBA core

1.1 The following solutions were prepared:

```
A.  501.8   parts by weight of n-butylacrylate
      2.6   parts by weight of allylmethacrylate
      7.7   parts by weight of tris(2-acrylyloxy-
            ethyl) isocyanurate


B.   12.8   parts by weight of sodium (n-dodecyl
            benzene sulphonate)
     512    parts by weight of demineralized water


C.   2.56 parts by weight of K2S2O8 (potassium
            peroxydisulphate)
     128    parts by weight of demineralized water
D.   2.56 parts by weight of Na2S2O5 (sodium
            disulphite)
     128    parts by weight of demineralized water.
```

A glass 2-litre-reactor was filled with B and a quarter of solution A, cooled to 10° C and made oxygen-free by rinsing/evacuating with nitrogen five times. The mixture of A and B was emulsified by stirring. The temperature was then raised to 40° C. 60 parts by weight of (deaerated) solution C were injected, succeeded by 60 parts by weight of (deaerated) solution D. The polymerisation reaction set in immediately, which resulted in a rise in temperature to 70-75° C in 10 minutes:

the temperature was then adjusted at 60° C and the pressure at 1.5 atmospheres. The remainders of solutions A, C and D (deaerated) were gradually added over a period of 2 hours by means of metering pumps. Stirring was then continued for another hour at 60° C to complete the reaction.

Preparation of the core-shell polymer

6

1.2 The following solutions were prepared and deaerated:

```
E. 125.4-a parts by weight of methylmethacrylate
         a parts by weight of styrene
      0.64 parts by weight of allylmethacrylate
      2.56 parts by weight of maleic anhydride
      1.9  parts by weight of tris(2-acrylyloxy-ethyl)
           isocyanurate
F.    0.64 parts by weight of K₂S₂O₈ (potassium
           peroxydisulphate)
      160  parts by weight of demineralized water
G.    0.64 parts by weight of Na₂S₂O₅ (sodium
           disulphite)
      32   parts by weight of demineralized water
```

The solutions E, F and G were added gradually to the reaction mixture obtained sub l.l over a period of thirty minutes, while stirring.

Isolation

1.3 The resulting latex was destabilized by pouring the contents of the reactor through a filter into a rapidly stirred aqueous solution containing 1% by weight of $CaCl_2$. The precipitated polymer was isolated by filtration, washed with water and dried in a vacuum at 60°C.

The following core-shell polymers were prepared (variable $\underline{a}$ = content of styrene)

Table 1

| $\underline{a}$ parts by weight | swelling index (g/g) | gel fraction (wt.%) | core-shell polymer No. |
|---|---|---|---|
| 0 | 4.9 | 99.0 | 1 * |
| 0 | 4.6 | 99.0 | 2 |
| 62.7 | 6.0 | 87.3 | 3 |
| 118.0 | 5.6 | 95.4 | 4 |

\* comprises no maleic anhydride.

The above-mentioned core-shell polymers were premixed in an extruder with a polyamide-6,6 and stabilizers. The extruder was adjusted at a temperature setting of on an average 275°C and a screw speed of 300 rpm. In this manner, four different pre-mixtures were prepared having a composition as indicated in Table 2. The used polyamide-6,6 had a number-averaged molecular weight $\overline{Mn}$ of 20,000 and a viscosity index of l35 ml/g measured according to ISO R 307 (0.5 g of polyamide dissolved in l00 g of 90% formic

7

acid at 25° C) and a moisture content after drying of less than 0.2% by weight.

<div align="center">Table 2</div>

| Pre-mixtures No. | P1 | P2 | P3 | P4 |
|---|---|---|---|---|
| Composition (parts by weight) | | | | |
| Polyamide-6,6 | 80 | 80 | 80 | 80 |
| Core-shell polymer No. 1 | 20 | – | – | – |
| 2 | – | 20 | – | – |
| 3 | – | – | 20 | – |
| 4 | – | – | – | 20 |
| Stabilizers | 0.4 | 0.4 | 0.4 | 0.4 |

Various polymer mixtures I to IV were prepared while using the pre-mixtures PI, P2, P3, P4, polyphenylene ether, maleic anhydride, polyamide-6,6 (as indicated before) and stabilizers. As a polyphenylene ether (poly(2,6-dimethylphenylene-I,4-ether) with an intrinsic viscosity of approximately 49 ml/g measured at 25° C in chloroform was used.

All polymer mixtures of examples I to IV were extruded in a Werner-Pfleiderer extruder adjusted at an average temperature of approximately 285° C, screw speed 300 rpm. The constituents were fed into the extruder at two different places; one part of the constituents at the end of the extruder and one part via a special filling device approximately halfway the extruder. The polymer mixture according to comparative example A was prepared by extruding the components as indicated in table 3, i.e., by feeding all components via the end of the extruder.

Test bars according to ASTM 638 were injection molded from the resulting polymer mixtures. Said bars were used for the determination of the tensile yield strength and the elongation upon fracture. Test bars according to ASTM D 256 were also moulded for the measurement of the notched Izod impact strength. Moreover, the instrumented falling dart impact was measured on disks having a thickness of 3.2 mm and a diameter of I00 mm. In this test a standard test body having a hemispherical tip and a weight of I00 N is dropped on the disk from a height of 2.2 m, the disk being laid on an annular support having a diameter of 95 mm. The absorbed energy to fracture was measured. The energy value thus found is indicated as "falling dart impact" (DIN 53443).

The measured properties are recorded in Table 3.

Table 3

| Example no. | A* | I* | II* | III* | IV |
|---|---|---|---|---|---|
| **Composition (parts by weight)** | | | | | |
| **Supplied via end of extruder** | | | | | |
| o polyphenylene ether | 50 | 50 | 50 | 50 | 50 |
| o maleic anhydride | 0.5 | 0.25 | 0.25 | 0.25 | 0.25 |
| o stabilisers | – | 0.4 | 0.4 | 0.4 | 0.4 |
| o pre-mixture P1 | – | 10 | – | – | – |
| o pre-mixture P2 | – | – | 10 | – | – |
| o pre-mixture P3 | – | – | – | 10 | – |
| o pre-mixture P4 | ~~50~~ | – | – | – | 10 |
| o polyamide-6,6 | *50* | – | – | – | – |
| **Supplied via special filling device halfway extruder** | | | | | |
| o pre-mixture P1 | – | 40 | – | – | – |
| o pre-mixture P2 | – | – | 40 | – | – |
| o pre-mixture P3 | – | – | – | 40 | – |
| o pre-mixture P4 | – | – | – | – | 40 |
| **Properties** | | | | | |
| Tensile yield strength (MPa) | 78 | 62 | 62 | 60 | 59 |
| Elongation at fracture (%) | 30 | 21 | 18 | 14 | 33 |
| Izod impact strength (J/m) | 38 | 109 | 103 | 80 | 177 |
| Falling dart impact (J) | – | 12 | 11 | 2 | 16 |

\* Comparative examples

As can be seen from Table 3, the polymer mixture according to the invention has an improved impact resistance.

Examples V, VI and B.

Three mixtures were compounded by blending the components as indicated in table 4 herebelow in an extruder. The mixtures were compounded under vacuum at barrel temperature settings of 220-285°C. The extruder was operated at a screw speed of 300 rpm.

The used components were the following:
o functionalized polyphenylene ether: the product obtained by reacting a polyphenylene ether with trimellitic anhydride acid chloride prepared according to WO 86/02086.

The intrinsic viscosity of the functionalized polyphenylene ether was 57.5 ml/g (25°C, measured in chloroform).

o polyamide : a polyamide-6,6 as described in the previous examples.

o core-shell polymer I : multiple stage copolymer with a polybutadiene core (67,5%) upon which a methylmethacrylate-styrene shell had been grafted.

o core-shell polymer 2 : multiple stage copolymer with a core (80%), comprising 98% butylacrylate and 2% graft linking agents, and a shell (20%), comprising 95% styrene, 2% maleic anhydride and 3% graft linking agents.

The obtained polymer mixtures were tested as indicated for examples I-IV. The compositions and the properties are recorded in table 4 herebelow.

## Table 4

| Example no. | B * | V * | VI |
|---|---|---|---|
| **Composition (parts by weight)** | | | |
| o Functionalized polyphenylene ether | 50 | 47.5 | 46.25 |
| o Polyamide | 50 | 47.5 | 46.25 |
| o Core-shell polymer 1 | – | 5 | – |
| o Core-shell polymer 2 | – | – | 7.5 |
| **Properties** | | | |
| o Notched Izod Impact (J/m) | 38 | 106 | 137 |
| o Falling Dart-Impact (J) | 1 | 25 | 58 |
| o Tensile yield strength (MPa) | 63 | 73 | 67 |
| o Elongation at fracture (%) | 7 | 35 | 41 |

\* comparative examples

It can be seen that the properties are improved by adding a core-shell polymer.

EP 0 234 063 B1

## Claims

1. Polymer mixture which comprises a polyamide, a polyphenylene ether, an agent to improve the compatibility of the polyamide and the polyphenylene ether and a core-shell polymer having a rubber-like core and one or more shells as an agent to improve the impact resistance wherein the mixture comprises one or more of the following agents A-F to improve the compatibility :

A) liquid diene polymers or epoxy compounds or compounds having in their molecular structure a double or triple carbon-to-carbon bond and a carboxylic acid, acid anhydride, ester, acid amide, imido, carboxylic acid ester, amino or hydroxyl group, in a quantity of from 0.01 to 30 parts by weight per 100 parts by weight of polyamide plus polyphenylene ether,

B) a silane compound having in its molecular structure both (a) at least one silicon atom which is bonded to a carbon atom via an oxygen bridge and (b) at least an ethylenic corbon-to-carbon double bond or a carbon-to-carbon triple bond and/or comprises a functional group selected from an amine group and a mercapto group, in which the functional group is not bonded directly to the silicon atom, in a quantity of from 0.05 to 4 parts by weight per 100 parts by weight of polyamide plus polyphenylene ether,

C) a functionalized polyphenylene ether consisting of the reaction product of (a) a polyphenylene ether and (b) a compound of the general formula (i)-Z-(ii), in which (i) is at least a group of the formula [X-C(0)] with X = F, Cl, Br, I, OH, -OR, or -O-C(O)-R with R = H, alkyl or aryl, in which (ii) is at least a carboxylic acid, acid anhydride, acid amide, imido, carboxylic acid ester, amino or hydroxyl group, and in which the groups (i) and (ii) are bonded together covalently via a bridge Z, Z being a bivalent hydrocarbon radical,

D) an oxidized polyolefin wax, in a quantity of from 0.01 to 10 parts by weight per 100 parts by weight of polyamide plus polyphenylene ether,

E) a copolymer having units of a vinylaromatic compound and of an alpha-beta unsaturated dicarboxylic acid or dicarboxylic acid anhydride or a copolymer with units of a vinylaromatic compound and of an imide compound of an alpha-beta unsaturated dicarboxylic acid, in a quantity of from 0.5 to 100 parts by weight per 100 parts by weight of polyamide plus polyphenylene ether,

F) the reaction product of a) a 1,2-substituted olefinic compound with carboxyl group or acid anhydrlde group, b) a polyphenylene ether and c) a radical initiator, in a quantity of from 0.5 to 150 parts by weight per 100 parts by weight of polyamide plus polyphenylene ether, characterised in that the outermost shell of the core-shell polymer comprises one or more functional groups selected from carboxylic acid groups, acid anhydride groups, acid amide groups, imido groups, amino groups, or hydroxyl groups and possesses a styrene content of 90.4 % by weight or higher.

2. A polymer mixture according to claim 1 wherein the outermost shell of the core-shell polymer comprises at least 0.1% by weight of maleic anhydride.

3. A polymer mixture as claimed in Claims 1-2, characterized in that the polymer mixture comprises the indicated constituents in the following quantities, the percentages being calculated by weight with respect to the sum of the quantities by weight of polyamide(s), polyphenylene ether(s) and impact resistance-improving agent(s): 5-94% of polyamide(s); 94-5% of polyphenylene ethers; 1-50% of agent-(s) to improve the impact resistance.

4. A polymer mixture as claimed in Claims 1-3, characterized in that the polyphenylene ether has been replaced entirely or partly by an agent as indicated in Claim 1 sub C) or F).

5. A polymer mixture as claimed in Claims 1-4, characterized in that the polymer mixture comprises a polyamide-6,6 or a polyamide-6 as a polyamide.

6. A polymer mixture as claimed in Claims 1-5, characterized in that the polymer mixture comprises poly-(2,6-dimethyl phenylene-1,4-ether) as a polyphenylene ether.

7. A polymer mixture as claimed in Claims 1-6, characterized in that in addition to the already mentioned constituents the polymer mixture comprises one or more of the following constituents: polystyrene homo- or copolymers, high-impact polystyrene, dyes, pigments, fillers, reinforcing fillers such as glass fibres, stabilizers, flame-retarding agents.

11

8. A method of preparing a polymer mixture as claimed in one or more of the preceding Claims, in which the various constituents are mixed together in the melt in more than one step, characterized in that the polyphenylene ether or a part of the quantity of polyphenylene ether to be used is first pre-mixed with the agent to improve the compatibility, after which the formed pre-mixture is mixed with the remaining constituents.

9. A method of preparing a polymer mixture as claimed in one or more of the preceding Claims, characterized in that the polyamide or a part of the quantity of polyamide to be used is first pre-mixed in the melt with the agent to improve the impact resistance, after which the resulting pre-mixture is mixed together in the melt with the remaining constituents.

10. A method as claimed in Claims 8 or 9, characterized in that the polyamide or a part of the quantity of polyamide to be used is first mixed in the melt with the agent to improve the impact resistance; the polyphenylene ether or a part of the quantity of polyphenylene ether to be used is mixed in the melt with the agent to improve the compatibility, after which the two resulting pre-mixtures and the constituents possibly not yet incorporated in the pre-mixtures, are mixed together in the melt.

11. Articles formed from a polymer mixture as claimed in Claims 1-7 or from a polymer mixture obtained by using the method as claimed in Claims 9-11.

**Revendications**

1. Mélange de polymères comprenant un polyamide, un polyoxyphénylène, un agent d'amélioration de la compatibilité du polyamide et du polyoxyphénylène, et un polymère à noyau et enveloppe comportant un noyau caoutchouteux et au moins une enveloppe, en tant qu'agent de la résistance aux chocs, mélange comprenant au moins un des agents d'amélioration de la compatibilité A à F suivants :

A) Des polymères diéniques liquides, des composés époxydés ou des composés comportant dans leur structure moléculaire, une double ou une triple liaison carbone-carbone, et un groupe acide carboxylique, anhydride d'acide, ester, amide dérivé d'acide, imido, ester d'acide carboxylique, amino ou hydroxyle, selon une quantité de 0,01 à 30 parties en poids pour 100 parties en poids du polyamide et du polyoxyphénylène,

B) Un silane comportant dans sa structure moléculaire, tant (a) au moins un atome de silicium lié à un atome de carbone par l'intermédiaire d'un pont oxygène, que (b) au moins une ou double liaison éthylénique carbone-carbone ou une triple liaison carbone-carbone, et/ou comprenant un groupe fonctionnel choisi parmi un groupe amine et un groupe mercapto, le groupe fonctionnel n'étant pas directement lié à l'atome de silicium, selon une quantité de 0,05 à 4 parties en poids pour 100 parties en poids du polyamide et du polyoxyphénylène,

C) Un polyoxyphénylène fonctionnalisé consistant en un produit de réaction (a) d'un polyoxyphénylène et (b) d'un composé de formule générale (i)-Z(ii), dans laquelle (i) représente au moins un groupe de formule [X-C(O)]-, X représentant F, Cl, Br, I, OH, OR, ou -O-C(O)-R, où R représente un atome d'hydrogène, un groupe alkyle ou aryle, et dans laquelle (ii) représente au moins un groupe acide carboxylique, anhydride d'acide, amide dérivé d'acide, imido, ester d'acide carboxylique, amino ou hydroxyle, et les groupes (i) et (ii) étant liés ensemble de manière covalente par l'intermédiaire d'un pont Z, Z représentant un groupe hydrocarboné bivalent,

D) Une cire polyoléfinique oxydée, selon une quantité de 0,01 à 10 parties en poids pour 100 parties en poids du polyamide et du polyoxyphénylène,

E) Un copolymère comportant des motifs dérivés d'un composé vinylaromatique et d'un acide dicarboxylique ou d'un anhydride d'acide dicarboxylique alpha-béta insaturé, ou un copolymère comportant des motifs dérivés d'un composé vinylaromatique et d'un imide dérivé d'un acide dicarboxylique alpha-béta insaturé, selon une quantité de 0,5 à 100 parties en poids pour 100 parties en poids du polyamide et du polyoxyphénylène,

F) Le produit de réaction a) d'un composé oléfinique 1,2 substitué avec un groupe carboxyle ou un groupe anhydride d'acide, b) d'un polyoxyphénylène et c) d'un initiateur radicalaire, selon une quantité de 0,5 à 150 parties en poids pour 100 parties en poids du polyamide et du polyoxyphénylène, caractérisé en ce que l'enveloppe extérieure du polymère à noyau et enveloppe, comprend au moins un groupe fonctionnel choisi parmi les groupes acide carboxylique, anhydride d'acide, amide dérivé d'acide, imido, amino ou hydroxyle, et en ce qu'elle a une teneur en styrène de 90,4 % en poids ou plus.

2. Mélange de polymères selon la revendication 1, dans lequel l'enveloppe extérieure du polymère à noyau et enveloppe, comprend au fins 0,1 % en poids d'anhydride maléique.

3. Mélange de polymères selon les revendications 1 et 2, caractérisé en ce qu'il comprend les constituants mentionnés selon les quantités suivantes, les pourcentages étant calculés en poids par rapport à la somme des quantités en poids du ou de chaque polyamide, du ou de chaque polyoxyphénylène et du ou de chaque agent d'amélioration de la résistance aux chocs : à savoir de 5 à 94 % du ou des polyamides, de 94 à 5 % du ou des poloxyphénylènes et de 1 à 50 % du ou des agents d'amélioration de la résistance aux chocs.

4. Mélange de polymères selon les revendications 1 et 3, caractérisé en ce que le polyoxyphénylène est entièrement ou partiellement remplacé par un agent C ou F selon la revendication 1.

5. Mélange de polymères selon les revendications 1 à 4, caractérisé en ce que le mélange de polymères comprend un polyamide 6,6 ou un polyamide 6 en tant que polyamide.

6. Mélange de polymères selon les revendications 1 à 5, caractérisé en ce que le mélange de polymères comprend du poly 2,6-diméthyl-1,4-oxyphénylène en tant que polyoxyphénylène.

7. Mélange de polymères selon les revendications 1 à 6, caractérisé en ce qu'en plus des constituants précités, le mélange de polymères comprend au moins l'un des constituants suivants : des homo ou copolymères de polystyrène, du polystyrène à haute résistance aux chocs, des colorants, des pigments, des charges, des charges de renforcement telles que des fibres de verre, des stabilisants et des agents retardateurs d'inflammation.

8. Procédé de préparation d'un mélange de polymères selon l'une quelconque des revendications précédentes, dans lequel les divers constituants sont mélangés ensemble à l'état fondu en plus d'une étape, caractérisé en ce que le polyoxyphénylène ou une partie de la quantité de polyoxyhénylène destinée à être employée, est d'abord préalablement mélangé avec l'agent d'amélioration de la compatibilité, après quoi le pré-mélange formé est mélangé avec les constituants restants.

9. Procédé de préparation d'un mélange de polymères selon l'une ou quelconque des revendications précédentes, caractérisé en ce que le polyamide ou une partie de la quantité du polyamide destinée à être employée, est d'abord préalablement mélangé à l'état fondu, avec l'agent d'amélioration de la résistance aux chocs, après quoi, le pré-mélange résultant est mélangé à l'état fondu avec les constituants restants.

10. Procédé selon la revendication 8 ou 9, caractérisé en ce que le polyamide ou une partie de la quantité de polyamide destinée à être employée, est d'abord mélangé à l'état fondu avec l'agent d'amélioration de la résistance aux chocs ; en ce que le polyoxyphénylène ou une partie de la quantité de polyoxyphénylène destinée à être employée, est mélangé à l'état fondu avec l'agent d'amélioration de la compatibilité, après quoi les deux pré-mélanges résultants et les constituants éventuellement non encore incorporés dans les pré-mélanges, sont mélangés ensemble à l'état fondu.

11. Article formé à partir d'un mélange de polymères selon les revendications 1 à 7, ou à partir d'un mélange de polymères obtenu en mettant en oeuvre le procédé selon les revendications 9 à 11.

**Ansprüche**

1. Polymermischung die enthält: ein Polyamid, einen Polyphenylenäther, ein Mittel zur Verbesserung der Verträglichkeit des Polyamids und des Polyphenylenäthers und ein Kern- Mantelpolymer mit einem gummiartigen Kern und einem oder mehreren Mänteln als Mittel zur Verbesserung der Schlagfestigkeit, wobei die Mischung zur Verbesserung der Verträglichkeit ein oder mehrere der folgenden Mittel A-F enthält:
   A) flüssige Dienpolymere oder Epoxyverbindungen oder Verbindungen die in ihrer Molekularstruk-

EP 0 234 063 B1

tur eine doppel- oder dreifach- Kohlenstoff-Kohlenstoffbindung und eine Carbonsäure-, Säureanhydrid-, Ester-, Säureamid-, Imido-, Carbonsäureester-, Amino- oder Hydroxylgruppe in einer Menge von 0,01 bis 30 Gew.-Teilen pro 100 Gew.-Teile des Polyamids plus Polyphenylenäther enthalten,

B) eine Silanverbindung, die in ihrer Molekularstruktur sowohl (a) wenigstens ein Siliziumatom aufweist, welches an ein Kohlenstoffatom über eine Sauerstoffbrücke gebunden ist und (b) wenigstens eine äthylenische Kohlenstoff-Kohlenstoffdoppelbindung oder eine Kohlenstoff-Kohlenstoffdreifachbindung und/oder eine funktionelle Gruppe enthält, die ausgewählt ist aus einer Aminogruppe und einer Mercaptogruppe in welcher die funktionelle Gruppe nicht direkt an das Siliziumatom gebunden ist, in einer Menge von 0,05 - 4 Gew.-Teilen pro 100 Gew.-Teile des Polyamids plus Polyphenylenäther,

C) einen funktionalisierten Polyphenylenäther, der aus dem Reaktionsprodukt von (a) einem Polyphenylenäther und (b) einer Verbindung der allgemeinen Formel (I)-Z-(II) besteht, worin (I) wenigstens eine Gruppe der Formel X-C(0) ist, mit X = F, Cl, Br, I, OH, -OR, oder -O-C(O)-R wobei R = H, Alkyl oder Aryl ist, worin (II) wenigstens eine Carbonsäure-, Säureanhydrid-, Säureamid-, Imido-, Carbonsäureester-, Amino- oder Hydroxylgruppe ist und worin die Gruppen (I) und (II) kovalent über eine Brücke Z miteinander verbunden sind, wobei Z ein zweiwertiger Kohlenwasserstoffrest ist,

D) ein oxidiertes Polyolefinwachs in einer Menge von 0,01 bis 10 Gew.-Teilen pro 100 Gew.-Teile des Polyamids plus Polyphenylenäther,

E) ein Copolymeres mit Einheiten aus einer vinylaromatischen Verbindung und einer alpha-beta ungesättigten Dicarbonsäure oder einem Dicarbonsäureanhydrid oder einem Copolymeren mit Einheiten aus einer vinylaromatischen Verbindung und einer Imidverbindung einer alpha-beta ungesättigten Dicarbonsäure in einer Menge von 0,5 bis 100 Gew.-Teilen pro 100 Gew.-Teile des Polyamids plus Polyphenylenäthers,

F) das Reaktionsprodukt von a) einer 1,2-substituierten olefinischen Verbindung mit einer Carboxylgruppe oder Säureanhydridgruppe b) einem Polyphenylenäther und c) einem Radikalinitiator in einer Menge von 0,5 bis 150 Gew.-Teilen pro 100 Gew.-Teile des Polyamids plus Polyphenylenäthers, dadurch gekennzeichnet, daß der äußerste Mantel des Kernmantelpolymeren eine oder mehrere funktionelle Gruppen aufweist, die ausgewählt sind aus Carbonsäuregruppen, Säureanhydridgruppen, Säureamidgruppen Imidgruppen, Aminogruppen oder Hydroxylgruppen und einen Styrolgehalt von 90,4 Gew.-% oder mehr besitzen.

2. Polymermischung nach Anspruch 1, worin der äußerste Mantel des Kern- Mantelpolymeren wenigstens 0,1 Gew.-% Maleinsäureanhydrid enthält.

3. Polymermischung nach den Ansprüchen 1 - 2, gekennzeichnet dadurch, daß die Polymermischung die angegebenen Bestandteile in den folgenden Mengen enthält, wobei die Prozentsätze auf das Gewicht unter Bezugnahme auf die Summe der Gewichtsmengen des der Polyamid (e), Polyphenylenäther und dem Mittel bzw. den Mitteln zur Verbesserung der Schlagfestigkeit bezogen sind: 5-94% Polyamid (e) 94-5% Polyphenylenäther, 1-50% Mittel zur Verbesserung der Schlagfestigkeit.

4. Polymermischung nach den Ansprüchen 1-3, gekennzeichnet dadurch, daß der Polyphenylenäther vollständig oder teilweise durch ein Mittel ersetzt ist wie es in Anspruch 1 unter C) oder F) angegeben ist.

5. Polymermischung nach den Ansprüchen 1-4, gekennzeichnet dadurch, daß die Polymermischung ein Polyamid -6,6 oder ein Polyamid-6 als Polyamid enthält.

6. Polymermischung nach den Ansprüchen 1-5, gekennzeichnet dadurch, daß die Polymermischung Poly-(2,6-dimethyl-phenylen-1,4-Äther) als Polyphenylenäther enthält.

7. Polymermischung nach den Ansprüchen 1-6, gekennzeichnet dadurch, daß zusätzlich zu den schon genannten Bestandteilen die Polymermischung ein oder mehrere der folgenden Bestandteile enthält: Polystyrol-homo-oder -copolymere, hochschlagfestes Polystyrol-, Farbstoffe, Pigmente, Füllstoffe, verstärkende Füllstoffe wie Glasfasern, Stabilisatoren, flammhemmende Mittel.

8. Verfahren zur Herstellung einer Polymermischung wie sie in einem oder mehreren der vorausgehenden Ansprüche beansprucht wird, bei dem die verschiedenen Bestandteile in der Schmelze in mehr als einer Stufe zusammengemischt werden, dadurch gekennzeichnet, daß der Polyphenylenäther oder ein Teil der Menge des verwendeten Polyphenylenäthers zuerst mit dem Mittel zur Verbesserung der Verträglichkeit vorgemischt wird, worauf die gebildete Vormischung mit den verbleibenden Bestandteilen gemischt wird.

9. Verfahren zur Herstellung einer Polymermischung, wie sie in einem oder mehreren der vorausgehenden Ansprüche beansprucht wird, gekennzeichnet dadurch, daß das Polyamid oder ein Teil der verwendeten Menge des Polyamids zunächst in der Schmelze mit dem Mittel zur Verbesserung der Schlagfestigkeit vorgemischt wird, wonach die erhaltene Vormischung in der Schmelze mit den verbleibenden Bestandteilen zusammengemischt wird.

10. Verfahren nach den Ansprüchen 8 oder 9, gekennzeichnet dadurch, daß das Polyamid oder ein Teil der verwendeten Menge des Polyamids zuerst in der Schmelze mit dem Mittel zur Verbesserung der Schlagfestigkeit gemischt wird, der Pclyphenylenäther oder ein Teil der verwendeten Menge des Polyphenylenäthers in der Schmelze mit dem Mittel zur Verbesserung der Verträglichkeit gemischt wird, wonach die beiden erhaltenen Vormischungen und die noch nicht in die Vormischungen einverleibten Bestandteile in der Schmelze zusammengemischt werden.

11. Gegenstände die aus einer Polymermischung ausgeformt sind, welche in den Ansprüchen 1-7 beansprucht ist oder aus einer Polymermischung die durch Verwendung des in den Ansprüchen 9 bis 11 beanspruchten Verfahrens erhalten worden ist.